# EUROPEAN PATENT SPECIFICATION

(11) **EP 1 584 528 B1**
(45) Date of publication and mention of the grant of the patent: **19.03.2008**
(21) Application number: 05007170.3
(22) Date of filing: 01.04.2005
(51) Int. Cl.: B60S 1/38, B60S 1/40

(54) **Wiper apparatus and wiper structure**
Wischervorrichtung und Wischerstruktur
Dispositif d'essuie-glace et structure de balai

(30) Priority: 06.04.2004 JP 2004112190; 06.04.2004 JP 2004112192
(43) Date of publication of application: 12.10.2005
(73) Proprietor: HONDA MOTOR CO., LTD., Tokyo (JP)
(72) Inventor: Kagawa, Mamoru, Wako-shi Saitama-ken (JP); Ohe, Tomohiro, Wako-shi Saitama-ken (JP)
(74) Representative: Herzog, Markus

(56) References cited:
- WO-A-03/068570
- WO-A-03/076241
- DE-A1- 3 829 343
- US-A1- 2002 056 168

## Description

### BACKGROUND OF THE INVENTION

The present invention relates to a wiper apparatus and to a wiper structure, and in particular, to a wiper apparatus and a wiper structure which are provided with a stabilizer which can enhance a follow-up performance of a wiper blade, and can enhance external appearance quality.

Among the wiper apparatuses which are provided to vehicles such as the cars, there is a wiper apparatus in which a stabilizer is attached to a wiper arm in order to enhance a follow-up performance of a wiper blade for a wiping operation of the wiper arm. The wiper blade is held to the stabilizer which is attached to the wiper arm, and thereby the wiper blade can be surely followed to the wiping operation of the wiper arm (for example, JP-A-2003-312448).

When the stabilizer is attached, the movement of the wiper blade which rotates at the upper and lower direction according to an extent of a curve of a window glass during the wiping operation should be considered, and there is a tendency that a height of the stabilizer becomes large in order to ensure the rotating range of the wiper blade and to ensure a attachment stability, and thereby a further improvement of an external appearance quality is desired.

However, in the above-mentioned conventional wiper structure, because the stabilizer is attached to the external surface of the wiper arm and the wiper blade which is supported by the wiper arm is attached to the stabilizer, a problem may occur in that the stabilizer, which is exposed to the outside, may generate wind noise.

Moreover, there is a problem that the external appearance quality of the circumference of the wiper is reduced by the exposed stabilizer.

WO 03/076241 A1 discloses a wiper apparatus in accordance with the preamble of claim 1.

### SUMMARY OF THE INVENTION

The present invention was made in view of the above situation, and objects of the present invention are to provide a wiper apparatus in which the wiper blade will surely move according to the movement of the wiper arm, while the external appearance quality can be improved.

In order to solve the above-described problems, a wiper apparatus of the present invention has a first stabilizer which is disposed between a wiper arm and a wiper blade, and a second stabilizer which is provided between a supporting point of the wiper arm and the first stabilizer for the wiper blade, and contacts with the wiper blade before the first stabilizer contacts with the wiper blade when the wiper blade is rotated.

According to the present invention, because the moving wiper blade can be held being shared by two stabilizers during the wiping operation of the wiper arm, it is not necessary to ensure a large height of stabilizer as in the case in which a single stabilizer is provided, the height of each stabilizer may be small, and thereby the external appearance quality can be improved.

In the present invention, the first stabilizer and the second stabilizer may be provided corresponding to the rotating portion of a tournament supporting structure of the wiper blade.

According to the present invention, because when the wiper blade is moved, each stabilizer can support the rotating portion of the tournament supporting structure, both the supporting member and the supported member are surely held in the rotating portion, and movement can be suppressed, as a result, the wiper blade can be surely held. In the present invention, the first stabilizer and the second stabilizer may be arranged on the inside of the wiper arm the lower part of which is open, the wiper blade is arranged in this portion.

According to the present invention, because the wiper blade which is supported so as to being stored in the wiper arm is held by two stabilizer which are equipped at the inside of the wiper arm, it is difficult to see the wiper blade from the exterior, and thereby the external appearance quality can be improved, while the wiper blade can be surely held.

### BRIEF DESCRIPTION OF THE DRAWINGS

FIG 1 is a front portion perspective view of a vehicle which shows an attachment state of a wiper apparatus according to an embodiment of the present invention.
FIG 2 is a perspective view as in FIG 1 without the hood and the cowl top upper garnish.
FIG 3 is a front surface view of the wiper apparatus.
FIG 4 is a plan view in FIG. 3.
FIG 5 is an exploded front surface view in FIG 3.
FIG 6 is a partial perspective view of the shank which shows a state in which the first stabilizer is attached.
FIG .7A is a cross-sectional view of the shank and the first stabilizer, and is a cross-sectional view along with line A-A in FIG 6.
FIG 7B is a cross-sectional view which shows a divided state along line A-A in FIG 6.
FIG 8 is an operation explanatory view of the wiper apparatus which is seen from the inside of the vehicle.
FIG 9 is an operation explanatory view of the wiper apparatus which is seen from the inside of the vehicle.
FIG 10 is an operation explanatory view of the wiper apparatus which is seen from the inside of the vehicle.

### DETAILED DESCRIPTION OF THE INVENTION

Next, an embodiment of the present invention is explained with reference to figures.

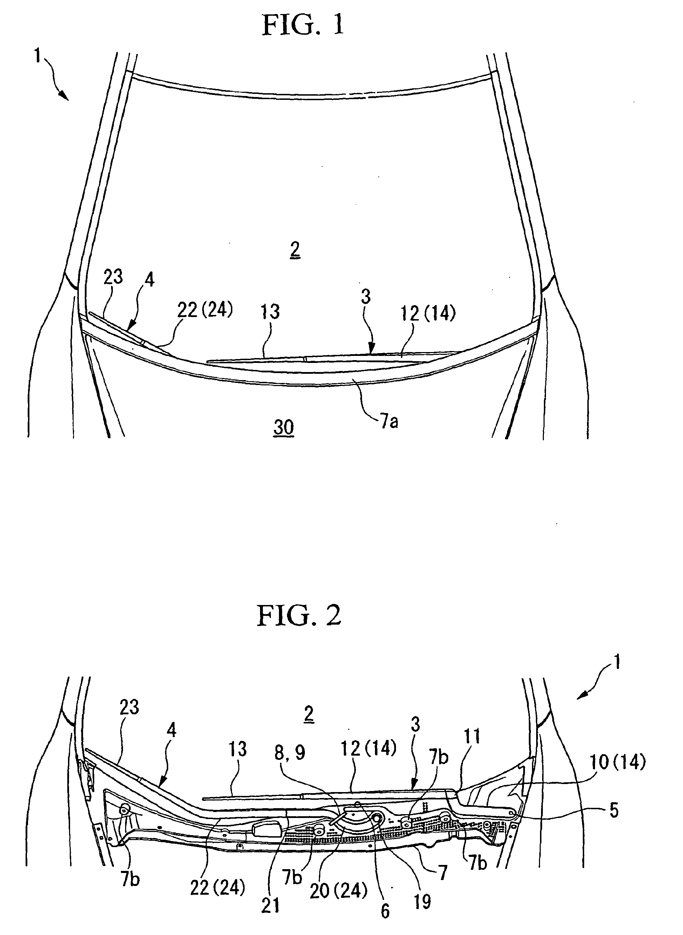

As shown in FIG 1 and FIG 2, a pair of wiper apparatuses 3 and 4 which wipe a front window glass 2 are provided to a vehicle 1. Each of the wiper apparatuses 3 and 4 are connected to pivot axes 5 and 6 which are rotated by a driving unit which is not shown in figure. In the first wiper apparatus 3 at the left side of the vehicle body, the pivot axis 5 is set at the left end, and the pivot axis 5 is projected from the cowl top garnish 7 which is arranged to a vehicle width direction at the lower part of the front window glass 2.

Furthermore, an arm base portion 10 is attached to the pivot axis 5, a shank 12 is supported by the arm base portion 10 via a hinge portion 11 so that the shank 12 can stand up elastically, and the wiper blade 13 is movably supported by a front end portion of the shank 12. A wiper arm 14 of the first wiper apparatus 3 is composed of the arm base portion 10 and the shank 12.

On the other hand, the second wiper apparatus 4 at the right side of the vehicle body is provided with a supporting shaft 19 which moves along an arc-shaped path at a center of the pivot axis 6 of a back side of the cowl top garnish 7 at a little left side of a central portion of the vehicle body. An arc-shaped arm base portion 20 is attached to the supporting shaft 19, the shank 22 is supported by a front end portion of the arc-shaped arm base portion 20 via the hinge portion 21 so that the shank 22 can stand up elastically, and the wiper blade 23 is movably supported by a front end portion of the shank 22. Here, the arc-shaped arm base portion 20 is inserted in the side of front window glass 2 from a penetrating hole 9 of the vertical wall 8 which is formed in the cowl top upper garnish 7a attached to an attachment seat 7b of the cowl top upper garnish 7a. The wiper arm 24 of the second wiper apparatus 4 is composed of the arc-shaped arm base portion 20 and the shank 22.

Furthermore, as shown in FIG 1, a base portion side of two wiper apparatuses 3 and 4 and a large part of the cowl top garnish 7 are covered with a rear edge portion of the hood 30 which is in a closed state.

Here, since because the arm base portion 10 of the first wiper apparatus 3 differs from the arc-shaped arm base portion 20 of the second wiper apparatus 4, and only the shank 22 of the second wiper apparatus 4 has a bent shape, the structures of the first wiper apparatus 3 and the second wiper apparatus 4 are the same including the structures of the shanks 12 and 22 and the wiper blades 13 and 23, an example of the first wiper apparatus 3 is explained.

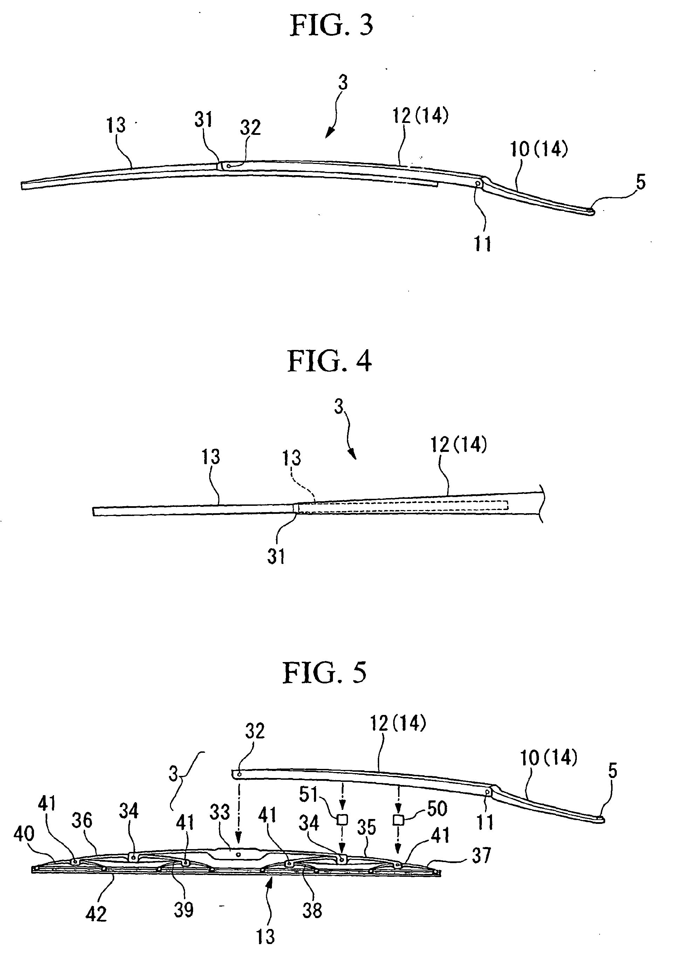

As shown in FIGs. 3 and 4, in the first wiper apparatus 3, the wiper blade 13 which is arranged in the inside of the shank 12 is movably supported by the front end portion of the metal shank 12 which has a U-shaped cross section.

Here, as mentioned above, the shank 12 is supported by the arm base portion 10 so that the shank 12 can stand up elastically, and when the front window glass 2 is cleaned, and the like, the part of the shank 12 is bent by the hinge 11, and the shank 12 can be stood up against a spring which is not shown in figure.

A resinous finisher 31 is attached to the front end portion of the shank 12 and between the shank 12 and the wiper blade 13, and thereby, because a clearance between the front end portion of the shank 12 and the wiper blade 13 is not seen from the outside, an impression that both are connected to each other is given.

As shown in FIG 5, the wiper blade 13 is provided with a primary arm 33 which is supported by the shank 12 by a pin (supporting point) 32, and two secondary arms 35 and 36 which are movably supported by the both end portions of the primary arm 33 by a pin (rotating portion) 34, and has a tournament structure in which each two yokes 37, 38, 39, and 40 are movably supported at the two end portions of each secondary arm 35 and 36 by a pin (rotating portion) 41. Furthermore, a blade body 42 is attached to both end portions of each of four yokes 37, 38, 39, and 40. In addition, regarding the secondary arms 35 and 36, and the yokes 37, 38, 39, and 40, from the base portion side to the rotating end side of the first wiper apparatus 3, the first secondary arm 35, the second secondary 36 are arranged, and the first yoke 37, the second yoke 38, the third yoke 39, and the fourth yoke 40 are arranged.

Furthermore, between the shank 12 of the wiper arm 14 and the wiper blade 13, from the base portion side to the rotating end side of the first wiper apparatus, the first stabilizer and the second stabilizer are disposed. Each of stabilizers 50 and 51 is formed in a U-shaped cross section, as mentioned later, and can be fitted to the inside of the shank 12. That is, the stabilizers 50 and 51 which hold the both sides of the wiper blade 13 are arranged to the inside of the shank 12 of the wiper arm 14 which covers the wiper blade 13.

The first stabilizer is arranged at an arrangement part of the pin 41 which is arranged at the rotating portion between the first yoke 37 and the secondary arm 35 so that the first stabilizer warps the pin 41, the second stabilizer 51 is arranged between an arrangement position of the pin 32 which is the supporting point of the shank 12 for the wiper blade 13 and the first stabilizer 50, and is arranged to an arrangement part of the pin 34 which is the rotating portion between the primary arm 33 and the first secondary arm 35 so that the second stabilizer warps the pin 34. Note that both stabilizers 50 and 51 have the same shapes at each other, and an example of the second stabilizer is explained.

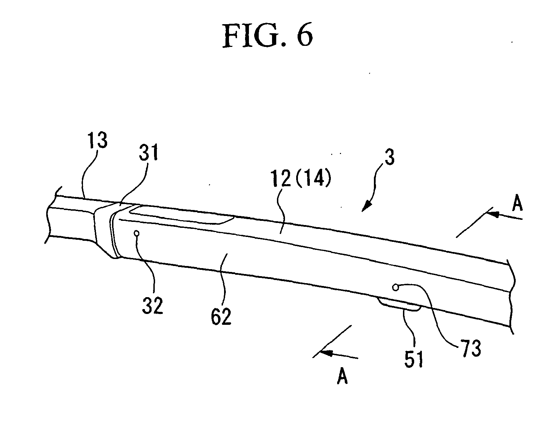

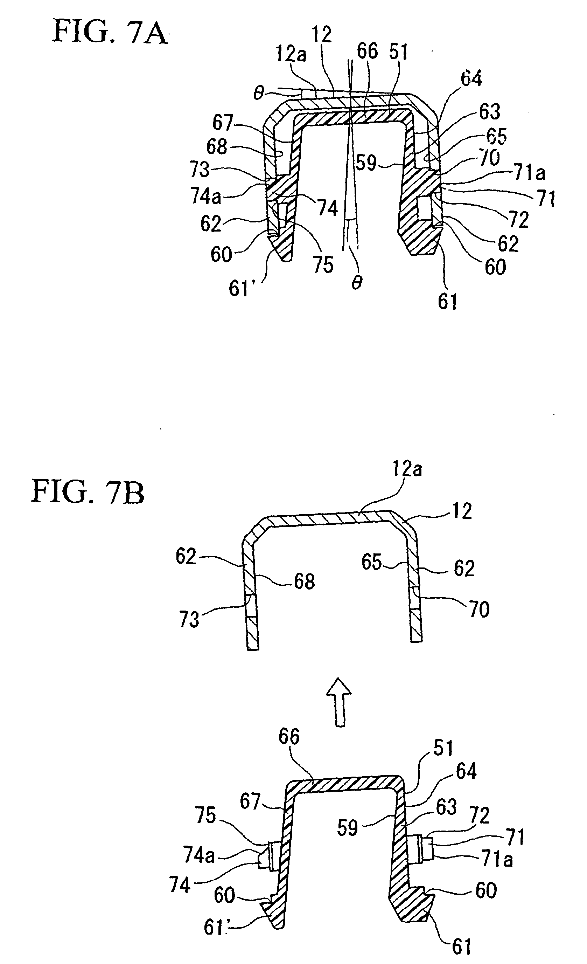

As shown in FIG 6, FIG. 7A, and FIG 7B, the second stabilizer is a resinous member which is fittably equipped with the inside of the shank 12, and is formed in a U-shaped cross section, engaging prongs 61 and 61' which are provided with stepped portions 60 which are engaged with a lower edge of both side walls 62 of the shank 12 and receives the shank 12 are formed up to a flush position with a side wall 62 of the shank 12.

Note that the engaging prong 61 is formed at the side of the front window glass 2, and the engaging prong 61' is formed at the opposite side of the front window glass 2.

Here, an external surface 64 of the side wall of the second stabilizer 51 which is formed in a U-shaped cross section, that is, the side wall (thereinafter, described as the rear wall) 63 of the side of the front window glass 2 which is positioned to the right side in FIG 7A and FIG. 7B, is formed parallel to the inside 65 of the shank 12, while the inside surface 59 of the rear wall 63 is inclined toward the upper wall 66 so that the inside surface 59 faces to the front window glass 2.

Moreover, both inner and outer surfaces of the side wall of the second stabilizer 51 which is positioned to the left side in FIG. 7A and FIG 7B, that is, the side wall (thereinafter, mentioned as the front wall) 67 which is positioned to a distant position from the front window glass 2 is inclined so that the both inner and outer surfaces become more distant for the inside surface 68 of the shank 12 according as the both inner and outer surfaces approach the upper wall 66, and approach to the front window glass 2. That is, the inside of the second stabilizer 51 is formed inclining to the side of the front window glass 2 for the outer surface of the shank 12, and when the shank 12 is set so that the upper wall 12a of the shank 12 becomes being lowered toward a front in order to add the power toward a pressing direction for the shank 12 at a time of driving, the second stabilizer 51 can contact with the surface of the front window glass 2 at a vertical direction.

Therefore, an inclination angle θ for the outer surface of the shank 12 at the inside of the second stabilizer 51 gives a front lowered angle θ as it is to the upper wall 12a of the shank 12.

Furthermore, a round shape cross section of projection 71 which can be fitted into a round hole 70 which is formed in the shank 12, and faces to the side of the front window glass 2 is provided to the rear wall 63 of the second stabilizer 51, the projection for the side wall 62 of the shank 12 is restrained by a stepped portion 72 of a front end portion 71a of the projection 71, and the front end portion 71a of the projection 71 is flush with the outer surface of the shank 12.

Moreover, the projection 74 which is engaged with the round hole 73 formed in the shank 12, and is positioned at the opposite side against the side which faces to the side of the front window glass 2 is formed in the front end portion of the stepped portion 75 on the front wall 67 of the second stabilizer 51, and, as well as in the case of the projection 71, the stepped portion 75 is engaged in the state that the projection of the shank 12 for the front wall 67 is restrained. The inclination portion 74a of which the upper surface is diagonally cut toward the lower side is formed to the projection 74.

The second stabilizer (the first stabilizer 50 is also the same) 51 which is constituted as such is attached to the shank 12.

Next, the functioning is explained.

As shown in FIG 1, the front window glass 2 is formed curving so that the left and right of the front window glass 2 turn to the rear side. Therefore, the wiper blade 13 which is supported by the shank 12 performing the wiping operation may be moved relative to the shank 12.

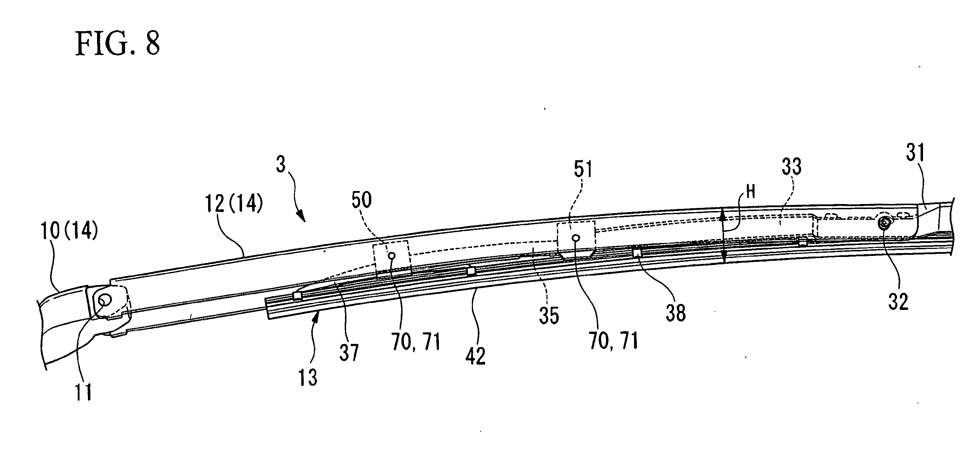

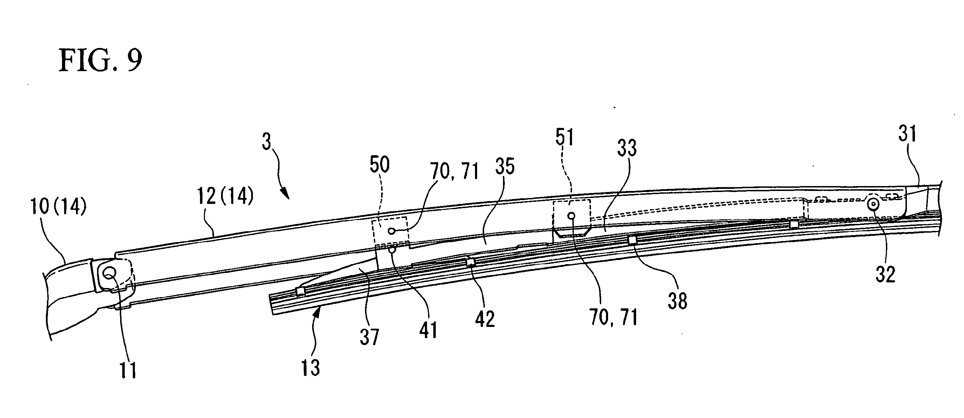

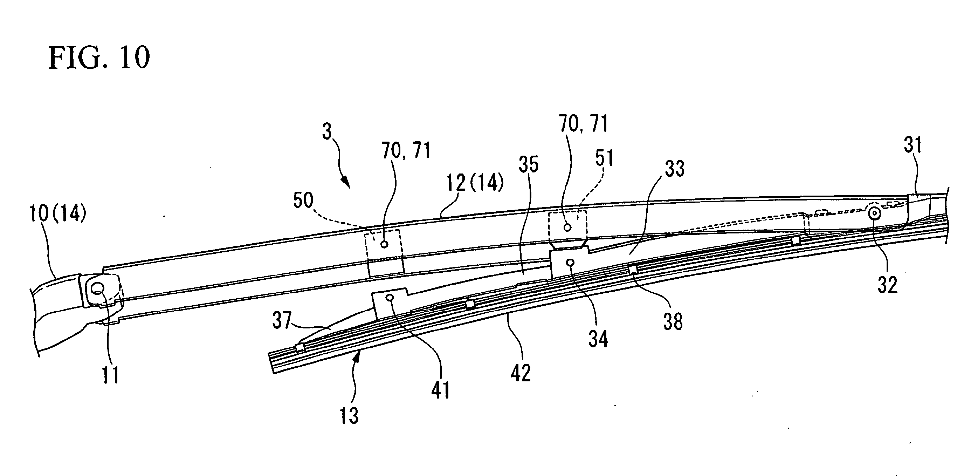

Specifically, as shown as seen from the inside of the vehicle in FIG 8 (FIG. 9 and FIG. 10 are the same), in the first wiper apparatus 3 which is in a stopped state, the first stabilizer 50 holds the arrangement position of the pin 41 of the first yoke 37 at both sides, and the second stabilizer 51 holds the arrangement position of the pin 34 of the first secondary arm 35 at both sides. When the wiping operation is started, the second stabilizer 51 contacts with the wiper blade 13 before the first stabilizer 50 contacts with the wiper blade 13, and holds the wiper blade 13; then, the first stabilizer 50 holds the wiper blade 13, and the wiper blade 13 performs the wiping operation with the shank 12.

In the stopped state of the first wiper apparatus 3, the wiper blade 13 and the stabilizers 50 and 51 are stored at the inside of the wiper arm 14, and thereby it is difficult to see them from the exterior, the external appearance quality can be improved. Moreover, because the wiper blade 13 and the stabilizers 50 and 51 are stored at the inside of the wiper arm 14, it is possible for a whole height H of the wiper arm 14 to be reduced, as a result, a wind noise can be reduced, and a quiet quality can be increased.

Furthermore, when the wiping operation is started, the second stabilizer 51 contacts with the wiper blade 13 before the first stabilizer 50 contacts with the wiper blade 13, and holds the wiper blade 13, then, the wiper blade 13 performs the wiping operation with the shank 12.

Furthermore, as shown in FIG. 9, when the wiping range of the wiper blade 13 approaches to the upper portion side of the front window glass 2, because the front window glass 2 is stretched out to the outside at the upper portion, the rotating end side of the wiper blade 13 is pressed to the upper part. Therefore, in contrast, the base portion side of the wiper blade 13 is displaced against the direction of coming out from the shank 12. However, in the present embodiment, the wiper blade 13 is held from the both sides by the first stabilizer 50 and the second stabilizer 51, the wiper blade 13 does not move in the width direction. Therefore, the wiper blade 13 is not left for the wiping operation of the shank 12, and thereby the wiper blade 13 surely performs the wiping operation with the shank 12.

Furthermore, as shown in FIG 10, when the first wiper apparatus 3 which is rotating arrives at the reversal position, the base portion side of the wiper blade 13 is completely comes off the shank 12, and the first stabilizer 50 cannot hold the wiper blade 13; however, because the second stabilizer 51 holds the wiper blade 13, the wiper blade 13 can follow the reversal operation with the shank 12.

Therefore, because the moving wiper blade 13 can be held being shared by the first stabilizer 50 and the second stabilizer 51 during the wiping operation of the shank 12, it is not necessary to ensure a large height H0 of stabilizer so that, for example, the wiper blade 13 is held at the reversal position by the first stabilizer 50 as in the case in which a single stabilizer is provided, as shown in FIG. 8, it is admitted that the height H1 of the first stabilizer 50 and the height H2 of the second stabilizer 51 (H1<<H0, H2<<H0) are small, and thereby the external appearance quality, in particular, the external appearance quality seen from the inside of the vehicle, can be improved.

Moreover, when the wiper blade 13 is moved, the first stabilizer 50 can support the part of the pin 41 which is the supporting point of the first secondary arm 35 and the first yoke 37, and the part of the pin 34 which is the supporting point of the primary arm 33 and the first secondary arm 35. Therefore, at the rotating portion which is constituted by the pin 41 and 34, the first secondary arm 35 which is the supporting member, and the first yoke which is the supported member, while the primary arm 33 which is the supporting member, and the first secondary arm 35 which is the supported member are surely held, and thereby the movement can be restrained. As a result, the wiper blade 13 can be surely held.

Furthermore, because the wiper blade 13 which is supported so that the wiper blade 13 is stored in the shank 12, is held by the first stabilizer 50 and the second stabilizer 51 which are equipped at the inside of the shank 12, it is difficult to see the wiper blade 13 from the exterior, the external appearance quality can be improved, while the wiper blade 13 can be surely held in the wiper arm 14.

Here, as shown in FIGs. 8 - 10, in the case of being seen from the inside of the vehicle, the projections 71 of the first stabilizer 50 and the second stabilizer 51 which face to the side of the front window glass 2 are flush with the side wall 62 of the shank 12, and because these projections 71 are fitted into the round hole 70 of the shank 12, it is difficult to see the projections 71 from the inside of the vehicle, and thereby the external appearance quality can be improved.

Furthermore, in the state of inclining the upper wall 12a of the shank 12 to the front lower direction in order to prevent the first wiper apparatus 3 from rising during driving, the wiper blade 13 which is held by the first stabilizer 50 and the second stabilizer 51 can come in contact with the surface of the front window glass 2 in the vertical direction. Therefore, without giving any processing to the shank 12, and without using a screw, or the like, the pressing power for the front window glass 2 can be secured without affecting the wiping performance, and thereby the structure of the shank 12 can be simplified, and a counterplan with a low cost can be attained.

Furthermore, when the first stabilizer 50 and the second stabilizer 51 are attached to the shank 12, the first stabilizer 50 and the second stabilizer 51 are pressed to the inside of the shank 12, and the projections 71 of the first stabilizer 50 and the second stabilizer 51 are engaged in the round hole 70 of the side wall 62 of the side of the front window glass 2 of the shank 12, and next, another projection 74 is engaged in the round hole 73 of the side wall 62 of the opposite side of the front window glass 2 of the shank 12, and thereby the attachment operation of each stabilizer 50 and 51 can be easily performed.

In particular, when the projection 74 is engaged, the engaging operation for the round hole 73 is easily performed by the inclining portion 74a of the projection 74, and thereby the attachment workability can be improved.

In addition, the present invention is not limited to the above-mentioned embodiments, and for example, it is not limited to use the front window glass, and the present invention can be applied to the wiper apparatus of the rear window glass.

## Claims

1. A wiper apparatus comprising:
a first stabilizer (50) which is disposed between a wiper arm (14) and a wiper blade (13);
**characterized by** a second stabilizer (51) which is provided between a supporting point (32) of the wiper arm (14) for the wiper blade (13) and the first stabilizer (50) and contacts the wiper blade (13) before the first stabilizer (50) contacts the wiper blade (13) when the wiper blade (13) is rotated.

2. A wiper apparatus according to claim 1,
wherein the first stabilizer (50) and the second stabilizer (51) are provided corresponding to a rotating portion of a tournament supporting structure of the wiper blade (13).

3. A wiper apparatus according to claim 1 or 2,
wherein the first stabilizer (50) and the second stabilizer (51) are arranged on the inside of the wiper arm (14) the lower part of which is open, and wherein the wiper blade (13) is arranged in the open portion thereof.

## Patentansprüche

1. Wischervorrichtung, umfassend:
einen ersten Stabilisator (50), der zwischen einem Wischerarm (14) und einem Wischblatt (13) angeordnet ist;
**gekennzeichnet durch** einen zweiten Stabilisator (51), der zwischen einem Halterungspunkt (32) des Wischerarms (14) für das Wischblatt (13) und dem ersten Stabilisator (50) vorgesehen ist und das Wischblatt (13) kontaktiert, bevor der erste Stabilisator (15) das Wischblatt (13) kontaktiert, wenn das Wischblatt (13) gedreht wird.

2. Wischervorrichtung nach Anspruch 1, worin der erste Stabilisator (50) und der zweite Stabilisator (51) entsprechend einem drehenden Abschnitt einer Schwenklagerstruktur des Wischblatts (13) vorgesehen sind.

3. Wischervorrichtung nach Anspruch 1 oder 2, worin der erste Stabilisator (50) und der zweite Stabilisator (51) an der Innenseite des Wischerarms (14) angeordnet sind, dessen unterer Teil offen ist, und worin das Wischblatt (13) in dem offenen Abschnitt davon angeordnet ist.

## Revendications

1. Dispositif d'essuie-glace comprenant :
un premier stabilisateur (50) qui est disposé entre un bras d'essuie-glace (14) et un balai d'essuie-glace (13) ;
**caractérisé par** un second stabilisateur (51) qui est prévu entre un point de support (32) du bras d'essuie-glace (14) pour le balai d'essuie-glace (13) et le premier stabilisateur (50), et est en contact avec le balai d'essuie-glace (13) avant que le premier stabilisateur (50) n'entre en contact avec le balai d'essuie-glace (13) lorsque le balai d'essuie-glace (13) est entraîné en rotation.

2. Dispositif d'essuie-glace selon la revendication 1, dans lequel le premier stabilisateur (50) et le second stabilisateur (51) sont prévus de manière correspondante par rapport à une partie de rotation d'une structure de support rotative du balai d'essuie-glace (13).

3. Dispositif d'essuie-glace selon la revendication 1 ou 2, dans lequel le premier stabilisateur (50) et le second stabilisateur (51) sont agencés sur l'intérieur du bras d'essuie-glace (14) dont la partie inférieure est ouverte et dans lequel le balai d'essuie-glace (13) est agencé dans sa partie ouverte.
